(19) Europäisches Patentamt
European Patent Office
Office européen des brevets

(11) EP 3 604 389 B1

(12) EUROPEAN PATENT SPECIFICATION

(45) Date of publication and mention of the grant of the patent:
**27.12.2023 Bulletin 2023/52**

(21) Application number: **18777581.2**

(22) Date of filing: **23.03.2018**

(51) International Patent Classification (IPC):
***C08G 73/10*** *(2006.01)* ***C08J 5/18*** *(2006.01)*

(52) Cooperative Patent Classification (CPC):
**C08G 73/1007; C08G 73/1039; C08G 73/1042; C08G 73/105; C08J 5/18**

(86) International application number:
**PCT/JP2018/011819**

(87) International publication number:
**WO 2018/181037 (04.10.2018 Gazette 2018/40)**

(54) **POLYIMIDE, POLYIMIDE SOLUTION, AND POLYIMIDE FILM**

POLYIMID, POLYIMIDLÖSUNG UND POLYIMIDFILM

POLYIMIDE, SOLUTION DE POLYIMIDE, ET FILM DE POLYIMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2017 JP 2017065923**

(43) Date of publication of application:
**05.02.2020 Bulletin 2020/06**

(73) Proprietor: **Mitsubishi Gas Chemical Company, Inc.**
**Tokyo 100-8324 (JP)**

(72) Inventors:
- **DAITO, Aoi**
  **Hiratsuka-shi**
  **Kanagawa 254-0016 (JP)**
- **SUENAGA, Shuya**
  **Hiratsuka-shi**
  **Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 777 929**
**WO-A1-2012/173126**
**JP-A- H 036 529**
**JP-A- H03 202 798**
**US-A- 4 963 649**
**US-A1- 2014 093 715**
**US-A1- 2016 251 545**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 604 389 B1

## Description

Technical Field

The present invention relates to polyimide, a polyimide solution, and a polyimide film.

Background Art

Recently, with the advent of a highly information-based society, materials satisfying both heat resistance and transparency have become desired in the field of optical communications including optical fibers, optical waveguides, and the like and in the field of display devices including liquid-crystal alignment films, color filters, and the like.

In the field of display devices, to make the weight of a device lighter or to make the device more flexible, studies have been conducted to replace a glass substrate used in the device with a plastic substrate having a lighter weight and more flexibility. In the case where light emitted from a display element emits through a plastic substrate, transparency is required for the plastic substrate. Furthermore, in the case where light passes through a phase difference film and/or a polarizing plate (e.g. liquid crystal displays, touch panels, and the like), high optical isotropy is also required in addition to the transparency.

As the plastic material that may satisfy the requirements described above, polyimides have been developed. For example, Patent Document 1 describes, as a polyimide having excellent transparency, heat resistance, and optical isotropy, a polyimide synthesized by using 1,2,4,5-cyclohexanetetracarboxylic dianhydride as a tetracarboxylic acid component and using 9,9-bis(3-methyl-4-aminophenyl)fluorene and 4,4'-diaminodiphenyl ether as diamine components; and the like.

Patent Document 2 describes a process for producing a transparent heat-resistant gas-barrier film, comprising the steps of coating a polysilazane-containing solution onto at least one surface of a transparent polyimide film formed of a polyimide containing a repeated unit represented by the following formula:

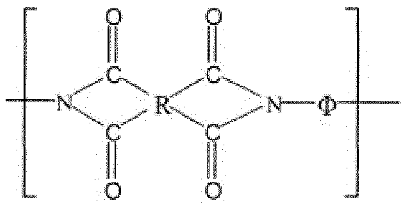

wherein R is a $C_{4-10}$ tetravalent group having a cyclic structure, an acyclic structure or both a cyclic structure and an acyclic structure, and $\phi$ is a $C_{2-39}$ divalent linking group containing an aliphatic structural unit, an alicyclic structural unit, an aromatic structural unit, an organosiloxane structural unit or a combination or a repeating structure of these structural units, and may contain at least one group selected from the group consisting of -O-, $-SO_2-$, -CO-, $-CH_2-$, $-C(CH_3)_2-$, $-C_2H_4O-$ und -S- in a main chain thereof; and calcining the coated solution at a temperature of 180°C or higher to laminate a silicon oxide layer obtained by the calcination on the transparent polyimide film.

Citation List

Patent Literature

Patent Document 1: JP 6010533 B
Patent Document 2: EP 2 777 929 A1

Summary of Invention

Technical Problem

Although polyimide described in Patent Document 1 is said to have good optical isotropy in addition to transparency and heat resistance, further improvement in the optical isotropy has been desired.

An object of the present invention is to provide polyimide having extremely excellent optical isotropy as well as excellent transparency and heat resistance.

Solution to Problem

The inventors of the present invention found that the problems described above can be solved by polyimide containing a combination of particular repeating units and thus completed the present invention.

That is, the present invention relates to the following [1] to [5].

[1] A polyimide containing a repeating unit represented by the following formula (I) and a repeating unit represented by the following formula (II).

[Chemical Formula 1]

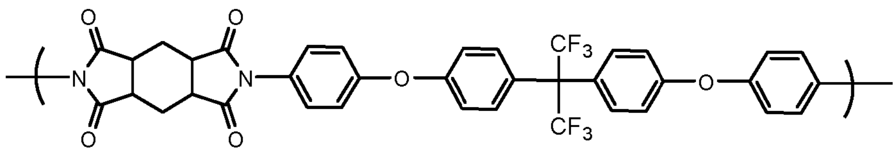

(I)

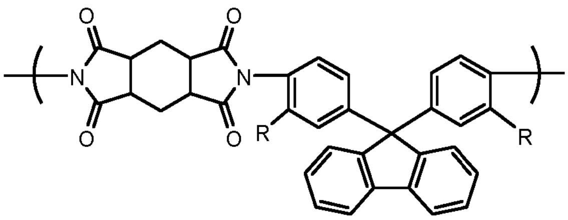

(II)

In the formula (II), R each independently represents a hydrogen atom, a fluorine atom, or a methyl group.

[2] The polyimide according to [1], where a content ratio of an amount of the repeating unit represented by the formula (I) to a total amount of the repeating unit represented by the formula (I) and the repeating unit represented by the formula (II) is from 1 to 30 mol%.

[3] The polyimide according to [1] or [2], where R represents a hydrogen atom.

[4] A polyimide solution formed by dissolving the polyimide described in any one of [1] to [3] in an organic solvent.

[5] A polyimide film comprising the polyimide described in any one of [1] to [3] above.

Advantageous Effects of Invention

The polyimide of the present invention has excellent transparency and heat resistance and has extremely excellent optical isotropy.

Description of Embodiments

Polyimide

The polyimide of the present invention contains a repeating unit represented by the following formula (I) (hereinafter, also referred to as "repeating unit I") and a repeating unit represented by the following formula (II) (hereinafter, also referred to as "repeating unit II").

[Chemical Formula 2]

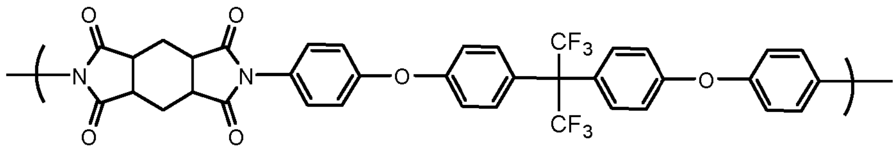

(I)

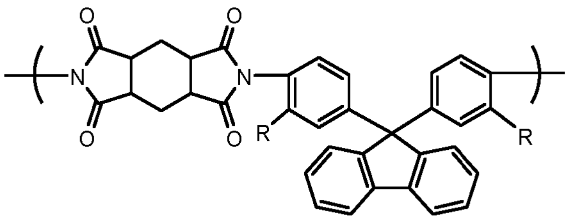

(II)

In the formula (II), R each independently represents a hydrogen atom, a fluorine atom, or a methyl group.

The repeating unit I is formed from a structure derived from 1,2,4,5-cyclohexanetetracarboxylic acid or a derivative thereof; and a structure derived from 2,2-bis[4-(4-aminophenoxy)phenyl]hexafluoropropane.

Meanwhile, the repeating unit II is formed from a structure derived from 1,2,4,5-cyclohexanetetracarboxylic acid or a derivative thereof; and a structure derived from 9,9-bis(4-aminophenyl)fluorene, 9,9-bis(4-amino-3-fluorophenyl)fluorene, or 9,9-bis(4-amino-3-methylphenyl)fluorene (hereinafter, these three kinds of diamines are also referred to as "9,9-bis(4-aminophenyl)fluorene and the like").

That is, the polyimide of the present invention is synthesized by using 1,2,4,5-cyclohexanetetracarboxylic acid or a derivative thereof as a tetracarboxylic acid component and using 2,2-bis[4-(4-aminophenoxy)phenyl]hexafluoropropane and 9,9-bis(4-aminophenyl)fluorene and the like as diamine components.

By allowing the polyimide of the present invention to contain both the structure derived from 2,2-bis[4-(4-aminophenoxy)phenyl]hexafluoropropane and the structure derived from 9,9-bis(4-aminophenyl)fluorene and the like, extremely excellent optical isotropy is achieved.

In the formula (II), R is each independently selected from the group consisting of a hydrogen atom, a fluorine atom, and a methyl group and is preferably a hydrogen atom.

In the present invention, the content ratio of the amount of the repeating unit I to the total amount of the repeating unit I and the repeating unit II is not particularly limited, and from the viewpoint of optical isotropy, the content ratio is preferably from 1 to 30 mol%, more preferably from 3 to 25 mol%, even more preferably from 3 to 20 mol%, particularly preferably from 3 to 15 mol%, and most preferably from 3 to 7 mol%.

In the present invention, the total content of the repeating unit I and the repeating unit II based on the amount of all the repeating units constituting the polyimide is preferably from 50 to 100 mol%, more preferably from 75 to 100 mol%, and even more preferably from 90 to 100 mol%. Furthermore, all the repeating units constituting the polyimide of the present invention may consist only of the repeating unit I and the repeating unit II.

The number average molecular weight of the polyimide of the present invention is preferably from 5,000 to 100,000 from the viewpoint of mechanical strength of the polyimide film that is obtained. Note that the number average molecular weight of the polyimide can be determined, for example, by gel permeation chromatography analysis based on calibration with standard polymethylmethacrylate (PMMA).

The polyimide of the present invention can be produced by allowing the tetracarboxylic acid component and the diamine component to react.

In the present invention, the tetracarboxylic acid component contains 1,2,4,5-cyclohexanetetracarboxylic acid or a derivative thereof. Examples of the derivative include 1,2,4,5-cyclohexanetetracarboxylic dianhydride and alkyl esters of 1,2,4,5-cyclohexanetetracarboxylic acid (e.g. dimethyl esters, diethyl esters, and dipropyl esters).

The tetracarboxylic acid component may contain another tetracarboxylic acid or a derivative thereof in addition to the 1,2,4,5-cyclohexanetetracarboxylic acid or a derivative thereof in the range that does not impair various physical properties of the polyimide. The content of such another tetracarboxylic acid is preferably 10 mol% or less, more preferably 5 mol% or less, and even more preferably 1 mol% or less based on the total amount of the tetracarboxylic acid component.

In the present invention, the diamine component contains 2,2-bis[4-(4-aminophenoxy)phenyl]hexafluoropropane and 9,9-bis(4-aminophenyl)fluorene and the like.

The diamine component may contain another diamine in addition to the 2,2-bis[4-(4-aminophenoxy)phenyl]hexafluoropropane and the 9,9-bis(4-aminophenyl)fluorene and the like in the range that does not impair various physical properties of the polyimide. The content of such another diamine is preferably 10 mol% or less, more preferably 5 mol% or less, and even more preferably 1 mol% or less based on the total amount of the diamine component.

Such "another diamine" described above is not particularly limited, and examples thereof include aliphatic diamines, aromatic ring-containing diamines, and the like. From the viewpoint of heat resistance of the polyimide, an aromatic ring-containing diamine is preferred.

Examples of the aliphatic diamine include alicyclic hydrocarbon structure-containing diamines and chain-like aliphatic diamines. Examples thereof include 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), carvone diamine, limonene diamine, isophorone diamine, norbornane diamine, bis(aminomethyl)tricyclo[5.2.1.$0^{2,6}$]decane, 3,3'-dimethyl-4,4'-diaminodicyclohexylmethane, 4,4'-diaminodicyclohexylpropane, 1,5-pentamethylenediamine, 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, and 2,2'-(ethylenedioxy)bis(ethyleneamine).

Examples of the aromatic ring-containing diamine include o-xylylenediamine, m-xylylenediamine, p-xylylenediamine, 1,2-diethynylbenzenediamine, 1,3-diethynylbenzenediamine, 1,4-diethynylbenzenediamine, 1,2-diaminobenzene, 1,3-diaminobenzene, 1,4-diaminobenzene, 4,4'-diaminodiphenyl ether, 3,4'-diaminodiphenyl ether, 4,4'-diaminodiphenylmethane, $\alpha,\alpha'$-bis(4-aminophenyl)-1,4-diisopropylbenzene, $\alpha,\alpha'$-bis(3- aminophenyl)-1,4-diisopropylbenzene, 2,2-bis[4-(4-aminophenoxy)phenyl]propane, 2,6-diaminonaphthalene, 1,5-diaminonaphthalene, 4,4'-diaminobenzanilide, and 3,4'-diaminobenzanilide.

Such "another diamine" optionally contained in the diamine component may be one kind or a combination of two or more kinds.

In the present invention, regarding the ratio between the charged amount of the tetracarboxylic acid component and the charged amount of the diamine component that are used for the production of the polyimide, the amount of the diamine component is preferably from 0.9 to 1.1 mol per 1 mol of the tetracarboxylic acid component.

Furthermore, in the production of the polyimide of the present invention, an end-capping agent may be used in addition to the tetracarboxylic acid component and the diamine component described above. As the end-capping agent, monoamines or dicarboxylic acids are preferable. The charged amount of the end-capping agent that is introduced is preferably from 0.0001 to 0.1 moles, and particularly preferably from 0.001 to 0.06 moles, per 1 mole of the tetracarboxylic acid component. Recommended examples of monoamine end-capping agents include methylamine, ethylamine, propylamine, butylamine, benzylamine, 4-methylbenzylamine, 4-ethylbenzylamine, 4-dodecylbenzylamine, 3-methylbenzylamine, 3-ethylbenzylamine, aniline, 3-methylaniline, and 4-methylaniline. Of these, benzylamine and aniline can be suitably used. As the dicarboxylic acid end-capping agent, dicarboxylic acids are preferable, and a portion thereof may be subjected to ring closure. Recommended examples thereof include phthalic acid, phthalic anhydride, 4-chlorophthalic acid, tetrafluorophthalic acid, 2,3-benzophenone dicarboxylic acid, 3,4-benzophenone dicarboxylic acid, cyclohexane-1,2-dicarboxylic acid, cyclopentane-1,2-dicarboxylic acid, and 4-cyclohexene-1,2-dicarboxylic acid. Of these, phthalic acid and phthalic anhydride can be suitably used.

The method of reacting the tetracarboxylic acid component and the diamine component described above is not particularly limited, and a known method can be used.

Specific examples of the reaction method include: (1) a method in which the tetracarboxylic acid component, the diamine component, and a reaction solvent are charged in a reactor and agitated at from room temperature to 80°C for 0.5 to 30 hours, and then the temperature is increased to perform an imidization reaction; (2) a method in which the diamine component and a reaction solvent are charged in a reactor and dissolved, then the tetracarboxylic acid component is charged therein and agitated at from room temperature to 80°C for 0.5 to 30 hours, and the temperature is then increased to perform an imidization reaction; (3) a method in which the tetracarboxylic acid component, the diamine component, and a reaction solvent are charged in a reactor, and thereafter, the temperature is immediately increased to perform an imidization reaction; and the like.

The reaction solvent used in the production of the polyimide may be a reaction solvent that does not inhibit the imidization reaction and that can dissolve the resulting polyimide. Examples thereof include aprotic solvents, phenol-based solvents, ether-based solvents, carbonate-based solvents, and the like.

Specific examples of the aprotic solvent include amide-based solvents, such as N,N-dimethylformamide, N,N-dimethylacetamide, N-methyl-2-pyrrolidone, N-methylcaprolactam, 1,3-dimethylimidazolidinone, and tetramethylurea; lactone-based solvents, such as $\gamma$-butyrolactone and $\gamma$-valerolactone; phosphorus-containing amide-based solvents, such as hexamethylphosphoric amide and hexamethylphosphine triamide; sulfur-containing solvents, such as dimethyl sulfone, dimethyl sulfoxide, and sulfolane; ketone-based solvents, such as acetone, cyclohexane, and methylcyclohexane; amine-based solvents, such as picoline and pyridine; and ester-based solvents, such as (2-methoxy-1-methylethyl) acetate.

Specific examples of the phenol-based solvent include phenol, o-cresol, m-cresol, p-cresol, 2,3-xylenol, 2,4-xylenol, 2,5-xylenol, 2,6-xylenol, 3,4-xylenol, and 3,5-xylenol.

Specific examples of the ether-based solvent include 1,2-dimethoxyethane, bis(2-methoxyethyl) ether, 1,2-bis(2-methoxyethoxy)ethane, bis[2-(2-methoxyethoxy)ethyl] ether, tetrahydrofuran, and 1,4-dioxane.

Specific examples of the carbonate-based solvent include diethyl carbonate, methylethyl carbonate, ethylene carbonate, and propylene carbonate.

Among these reaction solvents, an amide-based solvent or a lactone-based solvent is preferred. Furthermore, the reaction solvent may be used alone, or a mixture of two or more kinds of the reaction solvents may be used.

In the imidization reaction, the reaction is preferably performed while water generated during the production is removed by using the Dean-Stark apparatus or the like. By performing such operation, the degree of polymerization and the degree of imidization can be further increased.

In the imidization reaction described above, a known imidization catalyst can be used. Examples of the imidization catalyst include a base catalyst or an acid catalyst.

Examples of the base catalyst include organic base catalysts, such as pyridine, quinoline, isoquinoline, α-picoline, β-picoline, 2,4-lutidine, 2,6-lutidine, trimethylamine, triethylamine, tripropylamine, tributylamine, imidazole, N,N-dimethylaniline, and N,N-diethylaniline; and inorganic base catalysts, such as potassium hydroxide, sodium hydroxide, potassium carbonate, sodium carbonate, potassium hydrogencarbonate, and sodium hydrogencarbonate.

Furthermore, examples of the acid catalyst include crotonic acid, acrylic acid, trans-3-hexenoic acid, cinnamic acid, benzoic acid, methylbenzoic acid, oxybenzoic acid, terephthalic acid, benzenesulfonic acid, paratoluenesulfonic acid, and naphthalenesulfonic acid. The imidization catalyst may be used alone, or a combination of two or more kinds of the imidization catalysts may be used.

Among these, from the viewpoint of handling, using a base catalyst is preferred, using an organic base catalyst is more preferred, and using triethylamine is even more preferred.

The temperature of the imidization reaction is preferably from 120 to 250°C and more preferably from 160 to 190°C, from the viewpoints of reaction rate and suppression of gelling. Furthermore, the reaction time is, after the start of distillation of generated water, preferably from 0.5 to 10 hours.

Polyimide Solution

The polyimide solution of the present invention is a polyimide solution obtained by dissolving the polyimide of the present invention in an organic solvent. That is, the polyimide solution of the present invention contains the polyimide of the present invention and an organic solvent, and the polyimide is dissolved in the organic solvent.

The organic solvent is not particularly limited as long as the organic solvent is an organic solvent capable of dissolving the polyimide, and one kind or a mixture of two or more kinds of the compounds described above as the reaction solvents used during the production of the polyimide is preferably used.

Since the polyimide of the present invention has solvent solubility, the polyimide can be formed into a highly concentrated varnish that is stable at room temperature. The polyimide solution of the present invention contains preferably from 5 to 40 mass%, and more preferably from 10 to 30 mass%, of the polyimide of the present invention. The viscosity of the polyimide solution is preferably from 1 to 200 Pa·s and more preferably from 5 to 150 Pa·s.

Furthermore, the polyimide solution of the present invention may contain various additives, such as inorganic fillers, adhesion promoters, release agents, flame retardants, ultraviolet stabilizers, surfactants, leveling agents, defoaming agents, fluorescent brightening agents, crosslinking agents, polymerization initiators, and photosensitizers, in the range that does not impair required characteristics of a polyimide film.

The method of producing the polyimide solution of the present invention is not particularly limited, and a known method can be employed.

Polyimide Film

The polyimide film of the present invention contains the polyimide of the present invention. Therefore, the polyimide film of the present invention has excellent transparency and heat resistance and has extremely excellent optical isotropy.

The method of producing the polyimide film of the present invention is not particularly limited, and a known method can be employed. Examples thereof include a method in which the polyimide solution of the present invention is applied or molded in a film form, and then an organic solvent is removed therefrom.

The thickness of the polyimide film of the present invention can be appropriately selected depending on the purpose of use thereof but is typically from 0.1 to 500 μm, preferably from 1 to 250 μm, and more preferably from 5 to 100 μm.

The polyimide film of the present invention has suitable transparency. For example, when the thickness is 100 μm, the polyimide film of the present invention has a total light transmittance of preferably 85% or greater, more preferably 88% or greater, and even more preferably 90% or greater.

The polyimide film of the present invention has suitable heat resistance. The polyimide film of the present invention has a glass transition temperature of preferably 300°C or higher, more preferably 320°C or higher, even more

preferably 350°C or higher, and particularly preferably 380°C or higher.

Furthermore, the polyimide film of the present invention has excellent optical isotropy. Being completely optically isotropic means that, when the maximum refractive index in the plane of the polyimide film is designated as "nx", the minimum refractive index is designated as "ny", and the refractive index in the thickness direction is designated as "nz", the following relationship is satisfied:

$$nx = ny = nz$$

In the polyimide film of the present invention, the value of (nx - ny) is preferably 0.000080 or less, more preferably 0.000050 or less, even more preferably 0.000035 or less, particularly preferably 0.000025 or less, and most preferably 0.000015 or less.

Furthermore, in the polyimide film of the present invention, the value of ((nx + ny)/2 - nz) is preferably 0.0018 or less, more preferably 0.0015 or less, even more preferably 0.0010 or less, particularly preferably 0.0005 or less, and most preferably 0.0002 or less.

In the present invention, the thickness, the total light transmittance, the glass transition temperature, and the optical isotropy of the polyimide film can be measured by the methods specifically described in Examples.

The polyimide film of the present invention is suitably used as films for various components, such as color filters, flexible displays, semiconductor components, and optical members.

## Examples

The present invention is described more specifically below through examples.

Evaluation of the films obtained in Examples and Comparative Examples was performed as described below.

### (1) Film Thickness

The film thickness was measured by using a micrometer, available from Mitutoyo Corporation.

### (2) Total Light Transmittance

The total light transmittance was measured by using the color and haze measuring instrument "COH 400", available from Nippon Denshoku Industries Co., Ltd., in accordance with JIS K 7361-1.

### (3) Glass Transition Temperature

The glass transition temperature was determined by DSC measurement by using a differential scanning calorimeter (DSC 6200), available from SII NanoTechnology Inc., at a temperature increase rate of 10°C/min.

### (4) Optical Isotropy

The optical isotropy was measured by using an ellipsometer (M-220), available from JASCO Corporation. The value of the front phase difference at a measurement wavelength of 590 nm and the value of the thickness phase difference at a measurement wavelength of 590 nm were measured. By using these values, "nx - ny" and "(nx + ny)/2 - nz" were calculated, taking the maximum refractive index in the plane of the polyimide film as "nx", the minimum refractive index as "ny", and the refractive index in the thickness direction as "nz".

## Example 1

In a 300 mL five-neck round-bottom flask equipped with a semilunar-shaped stirring blade made of stainless steel, a nitrogen introduction tube, a Dean-Stark apparatus equipped with a cooling tube, a thermometer, and an end cap made of glass, 23.17 g (0.0665 mol) of 9,9-bis(4-aminophenyl)fluorene (available from Taoka Chemical Co., Ltd.) and 1.81 g (0.0035 mol) of 2,2-bis[4-(4-aminophenoxy)phenyl]hexafluoropropane (available from Wakayama Seika Kogyo Co., Ltd.) as the diamine component, and 49.74 g of y-butyrolactone (available from Mitsubishi Chemical Corporation) were agitated at a temperature inside the system of 70°C, at a rotational speed of 200 rpm, in a nitrogen atmosphere to obtain a solution.

In this solution, 16.47 g (0.07 mol) of 1,2,4,5-cyclohexanetetracarboxylic dianhydride (available from Mitsubishi Gas Chemical Company, Inc.) as the alicyclic tetracarboxylic acid component and 12.44 g of γ-butyrolactone (available

from Mitsubishi Chemical Corporation) were added together, and then 3.54 g of triethylamine (available from Kanto Chemical Co., Inc.) as the imidization catalyst was charged. Heating was performed by a mantle heater, and the temperature in the reaction system was increased to 190°C for approximately 20 minutes. The components removed by distillation were collected, while the rotational speed was adjusted and tailored to the increase in viscosity, the temperature inside the reaction system was maintained at 190°C, and the system was refluxed for 5 hours.

Next, 93.53 g of γ-butyrolactone (available from Mitsubishi Chemical Corporation) was added, the temperature inside the reaction system was cooled down to 120°C, after which stirring was performed again for approximately 3 hours to achieve homogenization, and a polyimide solution having a solid content concentration of 20 mass% was obtained. The obtained polyimide solution was then applied onto a glass plate and maintained at 100°C for 60 minutes by using a hot plate, and the solvent was volatilized to produce a primary dried film that was colorless and transparent and that had self-supporting capability. This film was fixed on a stainless steel frame, and the solvent was volatilized by being heated at 250°C for 2 hours in a hot-air dryer to obtain a film having a thickness of 100 μm. The results are shown in Table 1.

Example 2

In a 300 mL five-neck round-bottom flask equipped with a semilunar-shaped stirring blade made of stainless steel, a nitrogen introduction tube, a Dean-Stark apparatus equipped with a cooling tube, a thermometer, and an end cap made of glass, 20.73 g (0.0595 mol) of 9,9-bis(4-aminophenyl)fluorene (available from Taoka Chemical Co., Ltd.) and 5.44 g (0.0105 mol) of 2,2-bis[4-(4-aminophenoxy)phenyl]hexafluoropropane (available from Wakayama Seika Kogyo Co., Ltd.) as the diamine component, and 51.17 g of y-butyrolactone (available from Mitsubishi Chemical Corporation) were agitated at a temperature inside the system of 70°C, at a rotational speed of 200 rpm, in a nitrogen atmosphere to obtain a solution.

In this solution, 16.47 g (0.07 mol) of 1,2,4,5-cyclohexanetetracarboxylic dianhydride (available from Mitsubishi Gas Chemical Company, Inc.) as the alicyclic tetracarboxylic acid component and 12.79 g of γ-butyrolactone (available from Mitsubishi Chemical Corporation) were added together, and then 3.54 g of triethylamine (available from Kanto Chemical Co., Inc.) as the imidization catalyst was charged. Heating was performed by a mantle heater, and the temperature in the reaction system was increased to 190°C for approximately 20 minutes. The components removed by distillation were collected, while the rotational speed was adjusted and tailored to the increase in viscosity, the temperature inside the reaction system was maintained at 190°C, and the system was refluxed for 5 hours.

Next, 93.99 g of γ-butyrolactone (available from Mitsubishi Chemical Corporation) was added, the temperature inside the reaction system was cooled down to 120°C, after which stirring was performed again for approximately 3 hours to achieve homogenization, and a polyimide solution having a solid content concentration of 20 mass% was obtained. The obtained polyimide solution was then applied onto a glass plate and maintained at 100°C for 60 minutes by using a hot plate, and the solvent was volatilized to produce a primary dried film that was colorless and transparent and that had self-supporting capability. This film was fixed on a stainless steel frame, and the solvent was volatilized by being heated at 250°C for 2 hours in a hot-air dryer to obtain a film having a thickness of 37 μm. The results are shown in Table 1.

Example 3

In a 300 mL five-neck round-bottom flask equipped with a semilunar-shaped stirring blade made of stainless steel, a nitrogen introduction tube, a Dean-Stark apparatus equipped with a cooling tube, a thermometer, and an end cap made of glass, 19.51 g (0.0560 mol) of 9,9-bis(4-aminophenyl)fluorene (available from Taoka Chemical Co., Ltd.) and 7.26 g (0.0140 mol) of 2,2-bis[4-(4-aminophenoxy)phenyl]hexafluoropropane (available from Wakayama Seika Kogyo Co., Ltd.) as the diamine component, and 51.89 g of γ-butyrolactone (available from Mitsubishi Chemical Corporation) were agitated at a temperature inside the system of 70°C, at a rotational speed of 200 rpm, in a nitrogen atmosphere to obtain a solution.

In this solution, 16.47 g (0.07 mol) of 1,2,4,5-cyclohexanetetracarboxylic dianhydride (available from Mitsubishi Gas Chemical Company, Inc.) as the alicyclic tetracarboxylic acid component and 12.97 g of γ-butyrolactone (available from Mitsubishi Chemical Corporation) were added together, and then 3.54 g of triethylamine (available from Kanto Chemical Co., Inc.) as the imidization catalyst was charged. Heating was performed by a mantle heater, and the temperature in the reaction system was increased to 190°C for approximately 20 minutes. The components removed by distillation were collected, while the rotational speed was adjusted and tailored to the increase in viscosity, the temperature inside the reaction system was maintained at 190°C, and the system was refluxed for 5 hours.

Next, 95.49 g of γ-butyrolactone (available from Mitsubishi Chemical Corporation) was added, the temperature inside the reaction system was cooled down to 120°C, after which stirring was performed again for approximately 3 hours to achieve homogenization, and a polyimide solution having a solid content concentration of 20 mass% was

obtained. The obtained polyimide solution was then applied onto a glass plate and maintained at 100°C for 60 minutes by using a hot plate, and the solvent was volatilized to produce a primary dried film that was colorless and transparent and that had self-supporting capability. This film was fixed on a stainless steel frame, and the solvent was volatilized by being heated at 250°C for 2 hours in a hot-air dryer to obtain a film having a thickness of 44 μm. The results are shown in Table 1.

Comparative Example 1

In a 300 mL five-neck round-bottom flask equipped with a semilunar-shaped stirring blade made of stainless steel, a nitrogen introduction tube, a Dean-Stark apparatus equipped with a cooling tube, a thermometer, and an end cap made of glass, 23.17 g (0.0665 mol) of 9,9-bis(4-aminophenyl)fluorene (available from Taoka Chemical Co., Ltd.) and 1.44 g (0.0035 mol) of 2,2-bis[4-(4-aminophenoxy)phenyl]propane (available from Wakayama Seika Kogyo Co., Ltd.) as the diamine component, and 49.04 g of γ-butyrolactone (available from Mitsubishi Chemical Corporation) were agitated at a temperature inside the system of 70°C, at a rotational speed of 200 rpm, in a nitrogen atmosphere to obtain a solution.

In this solution, 16.47 g (0.07 mol) of 1,2,4,5-cyclohexanetetracarboxylic dianhydride (available from Mitsubishi Gas Chemical Company, Inc.) as the alicyclic tetracarboxylic acid component and 12.26 g of γ-butyrolactone (available from Mitsubishi Chemical Corporation) were added together, and then 3.54 g of triethylamine (available from Kanto Chemical Co., Inc.) as the imidization catalyst was charged. Heating was performed by a mantle heater, and the temperature in the reaction system was increased to 190°C for approximately 20 minutes. The components removed by distillation were collected, while the rotational speed was adjusted and tailored to the increase in viscosity, the temperature inside the reaction system was maintained at 190°C, and the system was refluxed for 5 hours.

Next, 89.57 g of y-butyrolactone (available from Mitsubishi Chemical Corporation) was added, the temperature inside the reaction system was cooled down to 120°C, after which stirring was performed again for approximately 3 hours to achieve homogenization, and a polyimide solution having a solid content concentration of 20 mass% was obtained. The obtained polyimide solution was then applied onto a glass plate and maintained at 100°C for 60 minutes by using a hot plate, and the solvent was volatilized to produce a primary dried film that was colorless and transparent and that had self-supporting capability. This film was fixed on a stainless steel frame, and the solvent was volatilized by being heated at 250°C for 2 hours in a hot-air dryer to obtain a film having a thickness of 35 μm. The results are shown in Table 1.

Comparative Example 2

In a 300 mL five-neck round-bottom flask equipped with a semilunar-shaped stirring blade made of stainless steel, a nitrogen introduction tube, a Dean-Stark apparatus equipped with a cooling tube, a thermometer, and an end cap made of glass, 19.51 g (0.0560 mol) of 9,9-bis(4-aminophenyl)fluorene (available from Taoka Chemical Co., Ltd.) and 5.74 g (0.0140 mol) of 2,2-bis[4-(4-aminophenoxy)phenyl]propane (available from Wakayama Seika Kogyo Co., Ltd.) as the diamine component, and 50.06 g of γ-butyrolactone (available from Mitsubishi Chemical Corporation) were agitated at a temperature inside the system of 70°C, at a rotational speed of 200 rpm, in a nitrogen atmosphere to obtain a solution.

In this solution, 16.47 g (0.07 mol) of 1,2,4,5-cyclohexanetetracarboxylic dianhydride (available from Mitsubishi Gas Chemical Company, Inc.) as the alicyclic tetracarboxylic acid component and 12.52 g of γ-butyrolactone (available from Mitsubishi Chemical Corporation) were added together, and then 3.54 g of triethylamine (available from Kanto Chemical Co., Inc.) as the imidization catalyst was charged. Heating was performed by a mantle heater, and the temperature in the reaction system was increased to 190°C for approximately 20 minutes. The components removed by distillation were collected, while the rotational speed was adjusted and tailored to the increase in viscosity, the temperature inside the reaction system was maintained at 190°C, and the system was refluxed for 5 hours.

Next, 91.69 g of y-butyrolactone (available from Mitsubishi Chemical Corporation) was added, the temperature inside the reaction system was cooled down to 120°C, after which stirring was performed again for approximately 3 hours to achieve homogenization, and a polyimide solution having a solid content concentration of 20 mass% was obtained. The obtained polyimide solution was then applied onto a glass plate and maintained at 100°C for 60 minutes by using a hot plate, and the solvent was volatilized to produce a primary dried film that was colorless and transparent and that had self-supporting capability. This film was fixed on a stainless steel frame, and the solvent was volatilized by being heated at 250°C for 2 hours in a hot-air dryer to obtain a film having a thickness of 44 μm. The results are shown in Table 1.

Comparative Example 3

In a 300 mL five-neck round-bottom flask equipped with a semilunar-shaped stirring blade made of stainless steel, a nitrogen introduction tube, a Dean-Stark apparatus equipped with a cooling tube, a thermometer, and an end cap made of glass, 23.17 g (0.0665 mol) of 9,9-bis(4-aminophenyl)fluorene (available from Taoka Chemical Co., Ltd.) and 0.70 g (0.0035 mol) of 4,4'-diaminodiphenyl ether (available from Wakayama Seika Kogyo Co., Ltd.) as the diamine component, and 48.29 g of γ-butyrolactone (available from Mitsubishi Chemical Corporation) were agitated at a temperature inside the system of 70°C, at a rotational speed of 200 rpm, in a nitrogen atmosphere to obtain a solution.

In this solution, 16.47 g (0.07 mol) of 1,2,4,5-cyclohexanetetracarboxylic dianhydride (available from Mitsubishi Gas Chemical Company, Inc.) as the alicyclic tetracarboxylic acid component and 12.07 g of γ-butyrolactone (available from Mitsubishi Chemical Corporation) were added together, and then 3.54 g of triethylamine (available from Kanto Chemical Co., Inc.) as the imidization catalyst was charged. Heating was performed by a mantle heater, and the temperature in the reaction system was increased to 190°C for approximately 20 minutes. The components removed by distillation were collected, while the rotational speed was adjusted and tailored to the increase in viscosity, the temperature inside the reaction system was maintained at 190°C, and the system was refluxed for 5 hours.

Next, 87.99 g of γ-butyrolactone (available from Mitsubishi Chemical Corporation) was added, the temperature inside the reaction system was cooled down to 120°C, after which stirring was performed again for approximately 3 hours to achieve homogenization, and a polyimide solution having a solid content concentration of 20 mass% was obtained. The obtained polyimide solution was then applied onto a glass plate and maintained at 100°C for 60 minutes by using a hot plate, and the solvent was volatilized to produce a primary dried film that was colorless and transparent and that had self-supporting capability. This film was fixed on a stainless steel frame, and the solvent was volatilized by being heated at 250°C for 2 hours in a hot-air dryer to obtain a film having a thickness of 49 μm. The results are shown in Table 1.

[Table 1]

Table 1

| | | Example 1 | Example 2 | Example 3 | Comparative Example 1 | Comparative Example 2 | Comparative Example 3 |
|---|---|---|---|---|---|---|---|
| Polyimide composition | Tetracarboxylic acid component | HPMDA | | | | | |
| | Diamine component (number in parenthesis shows mole ratio) | BAFL (95) | BAFL (85) | BAFL (80) | BAFL (95) | BAFL (80) | BAFL (95) |
| | | HFBAPP (5) | HFBAPP (15) | HFBAPP (20) | BAPP (5) | BAPP (20) | ODA (5) |
| Film evaluation | Film thickness of film (μm) | 100 | 37 | 44 | 35 | 44 | 49 |
| | Total light transmittance (%) | 90.4 | 90 | 90.2 | 88.4 | 89.4 | 89.1 |
| | Glass transition temperature (°C) | 419 | 395 | 387 | 418 | 388 | 421 |
| | nx - ny | 0.000011 | 0.000022 | 0.000016 | 0.000040 | 0.000066 | 0.000018 |
| | (nx + ny)/2 - nz | 0.000041 | 0.000408 | 0.000955 | 0.000300 | 0.001659 | 0.000322 |

Abbreviations in the table are as follows.

HPMDA: 1,2,4,5-cyclohexanetetracarboxylic dianhydride
BAFL: 9,9-bis(4-aminophenyl)fluorene
HFBAPP: 2,2-bis[4-(4-aminophenoxy)phenyl]hexafluoropropane
BAPP: 2,2-bis[4-(4-aminophenoxy)phenyl]propane
ODA: 4,4'-diaminodiphenyl ether

As is shown in Table 1, the polyimide film of each of Examples 1 to 3 has excellent transparency and heat resistance and has extremely excellent optical isotropy.

## Claims

1. A polyimide comprising a repeating unit represented by the following formula (I) and a repeating unit represented by the following formula (II):

[Chemical Formula 1]

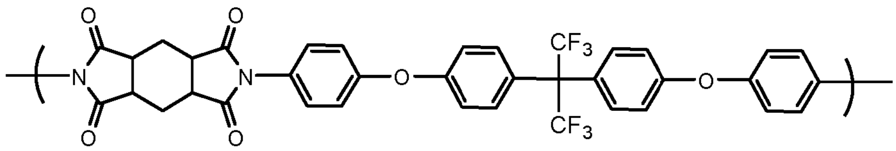

(I)

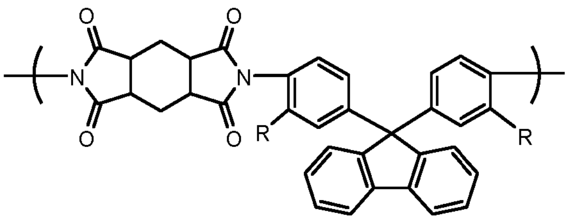

(II)

wherein, R each independently represents a hydrogen atom, a fluorine atom, or a methyl group.

2. The polyimide according to claim 1, wherein a content ratio of an amount of the repeating unit represented by the formula (I) to a total amount of the repeating unit represented by the formula (I) and the repeating unit represented by the formula (II) is from 1 to 30 mol%.

3. The polyimide according to claim 1 or 2, wherein R represents a hydrogen atom.

4. A polyimide solution formed by dissolving the polyimide described in any one of claims 1 to 3 in an organic solvent.

5. A polyimide film comprising the polyimide described in any one of claims 1 to 3.

## Patentansprüche

1. Polyimid, umfassend eine durch die folgende Formel (I) dargestellte Wiederholungseinheit und eine durch die folgende Formel (II) dargestellte Wiederholungseinheit:

[Chemische Formel 1]

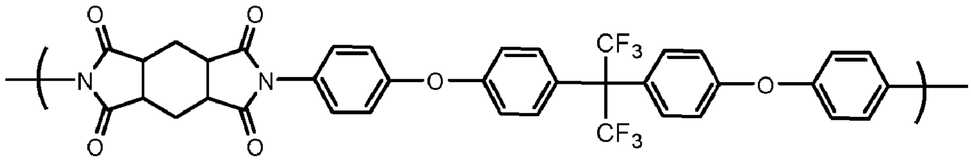

(I)

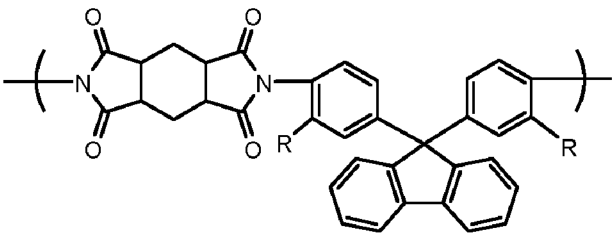

(II)

worin R jeweils unabhängig ein Wasserstoffatom, ein Fluoratom oder eine Methylgruppe darstellt.

2. Polyimid gemäß Anspruch 1, wobei ein Gehaltsverhältnis einer Menge der durch die Formel (I) dargestellten Wiederholungseinheit zu einer Gesamtmenge der durch die Formel (I) dargestellten Wiederholungseinheit und der durch die Formel (II) dargestellten Wiederholungseinheit 1 bis 30 mol-% beträgt.

3. Polyimid gemäß Anspruch 1 oder 2, worin R ein Wasserstoffatom darstellt.

4. Polyimidlösung, die durch Lösen des in einem der Ansprüche 1 bis 3 beschriebenen Polyimids in einem organischen Lösungsmittel gebildet wird.

5. Polyimidfolie, umfassend das in einem der Ansprüche 1 bis 3 beschriebene Polyimid.

**Revendications**

1. Polyimide comprenant une unité de répétition représentée par la formule (I) suivante ainsi qu'une unité de répétition représentée par la formule (II) suivante :

[Formule chimique 1]

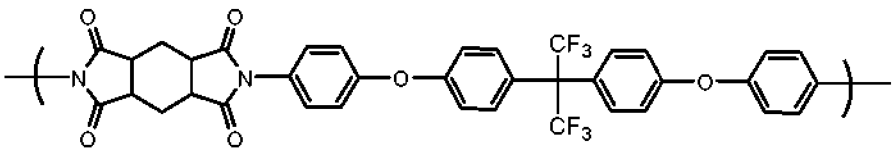

(I)

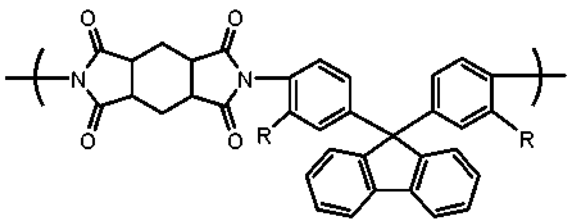

(II)

dans laquelle, R représente indépendamment chacun un atome d'hydrogène, un atome de fluor ou un groupe méthyle.

2. Polyimide selon la revendication 1, dans lequel un rapport de teneur entre une quantité de l'unité de répétition représentée par la formule (I) par rapport à une quantité totale de l'unité de répétition représentée par la formule (I)

et l'unité de répétition représentée par la formule (II) est comprise entre 1 % et 30 % en moles.

3. Polyimide selon la revendication 1 ou la revendication 2, dans lequel R représente un atome d'hydrogène.

4. Solution de polyimide formée en dissolvant le polyimide selon l'une quelconque des revendications 1 à 3 dans un solvant organique.

5. Film de polyimide comprenant le polyimide selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6010533 B
- EP 2777929 A1